# EUROPEAN PATENT SPECIFICATION

(11) **EP 4 363 360 B1**
(45) Date of publication and mention of the grant of the patent: **04.11.2026**
(21) Application number: 22744593.9
(22) Date of filing: 23.06.2022
(51) Int. Cl.: B65G 47/51, B65G 47/71, B65G 47/76, B65G 47/64

(54) **APPARATUS FOR THE INTERMEDIATE STORAGE OF PRODUCTS TRANSPORTABLE BY MEANS OF A CONVEYING DEVICE**
VORRICHTUNG ZUM ZWISCHENSPEICHERN VON MITTELS EINER FÖRDEREINRICHTUNG TRANSPORTIERBAREN GÜTERN
APPAREIL POUR LE STOCKAGE INTERMÉDIAIRE DE PRODUITS TRANSPORTABLES AU MOYEN D'UN DISPOSITIF DE TRANSPORT

(30) Priority: 29.06.2021 DE 102021116736
(43) Date of publication of application: 08.05.2024
(73) Proprietor: Illinois Tool Works Inc., Glenview IL 60025 (US)
(72) Inventor: WÖHLE, Linus, Glenview, IL 60025 (US)
(74) Representative: Meissner Bolte Partnerschaft mbB
(86) International application number: PCT/US2022/034724
(87) International publication number: WO 2023/278244

(56) References cited:
- EP-A1- 3 401 247
- JP-A- 2004 010 341
- JP-A- H07 267 352
- US-A1- 2002 046 920

## Description

### BACKGROUND OF THE INVENTION

### Field of the Invention

The present invention relates to an apparatus for intermediate storage of products that are transportable by means of a conveying device, in particular food products or packages.

### Description of Related Art

Such intermediate storage systems are generally known. The known intermediate storage systems are generally arranged between an upstream and a downstream processing device, wherein, during operation, the products are transported by means of a conveying device, for example a conveyor belt, from the upstream processing device via the intermediate storage system, whose storage belts or storage lines are likewise respectively configured as a conveying device for transporting the products, to the downstream processing device. EP 3 401 247 A1 discloses an apparatus for intermediate storage of products according to the preamble of claim 1.

The intermediate storage system is used in order to store or buffer the products delivered by the upstream processing device at a particular feed rate if the downstream processing device can temporarily process the delivered products at only a lower rate than the feed rate. The intermediate storage system picks up more products in this mode of operation than it outputs to the downstream processing device, so that multiple storage belts are loaded with products.

If, on the other hand, there is a requirement that the downstream processing device be able to process the products at a higher rate than the current - possibly impaired - feed rate, the intermediate storage system, which has a certain supply of products at its disposal, outputs more products to the downstream processing device than it receives from the upstream processing device, so that the downstream processing device can constantly be supplied with products, wherein the storage belts or storage lines of the intermediate storage system are successively unloaded.

An intermediate storage system of the type considered herein may also serve to extend a belt section between production and packaging when, for example, the products are still being cooled before they can be packaged. Thus, an intermediate storage system may serve as a belt buffer and, in addition to flexible buffering of malfunctions, it can also perform a cooling function. For example, this is often the case in biscuit production because the freshly produced products are still hot out of the oven and need to be gently cooled before being packaged.

The intermediate storage systems of the type according to the invention and considered herein are, in particular, horizontal storage tables in which packages or products are temporarily stored or are temporarily storable without pressure, which is to say with a predefined or definable (slight) distance between one another. In particular, the invention thus does not relate to a so-called "low-pressure storage apparatus," such as those used in particular as a storage apparatus or distribution unit in bottle-filling plants. In such low-pressure storage apparatuses, the containers (in particular bottles) are transported and temporarily stored at a certain (low) dynamic pressure.

Packaging systems are generally characterized in particular by a plurality of packaging stations (packaging devices) that further process the packages in different work steps. In filling systems for beverage cartons, for example, first a straw applicator and then a shrink film applicator are used subsequent to a filling machine. In the shrink film applicator, multiple packages are combined into one pack.

When designing a packaging system, the focus is increasingly on the processing rate, i.e., the number of packages per unit of time. The higher the packaging rate of a packaging system, the more efficiently the packaging system works. There is therefore a fundamental need to optimize the processing rate of a single packaging station or packaging device of the packaging system in order to increase the processing rate of the entire packaging system. When operating a packaging system, the goal is to operate the respective slowest packaging station (packaging device) at its maximum processing rate to the extent possible in order to maximize the throughput of packages of the packaging system to the extent possible.

On the other hand, when operating the packaging system, it is generally also unavoidable for malfunctions to occur during the processing of the packages at individual packaging devices. In order to be able to maintain a production process that is as malfunction-free as possible and/or to compensate for fluctuations in the processing rate of packaging devices of the packaging system, it is generally common for an intermediate storage system of the type according to the present invention and considered herein to be used between two packaging devices.

The problem of the invention is to further develop an intermediate storage system of the aforementioned type in such a way that the processing rate of the associated packaging system can be further increased.

### SUMMARY OF THE INVENTION

This problem is solved according to the invention by the subject-matter of independent claim 1, wherein advantageous further developments of the invention are specified in the dependent claims.

Accordingly, the invention relates in particular to an apparatus for intermediate storage of products that are transportable by means of a conveying device, wherein the apparatus comprises the following:
- a first infeed belt and at least one further, second infeed belt, wherein the first and at least one second infeed belt are each drivable along an infeed direction;
- an outfeed belt that is drivable along an outfeed direction;
- a storage module formed from a plurality of tracks, in particular arranged parallel to one another, each being configured as storage lines;
- a discharge system having a removal device, which is configured in order to remove products from one of the storage lines as needed and to supply these products to the outfeed belt;
- a first loading device associated with the first infeed belt and configured in order to supply products supplied via the first infeed belt to a first group of storage lines of the storage module; and
- a second loading device associated with the at least one second infeed belt and configured in order to supply products supplied via the at least one second infeed belt to a second group of storage lines of the storage module.

In particular, it is provided that the first group of storage lines and the second group of storage lines each comprise at least one storage line.

In particular, it is provided that the storage lines belonging to the first group are different from the storage lines belonging to the second group.

In particular, it is provided that the first loading device and/or the second loading device is/are formed as an in particular linearly operated satellite, which is movable in particular transversely and preferably perpendicularly to the storage lines of the respective groups.

Alternatively, it is conceivable that the first loading device and/or the second loading device is/are formed as a pivotally operated belt that is pivotable between the storage lines of the respective group starting from the respective infeed belt.

In particular, it is provided that the removal device is formed as an in particular linearly operated satellite, which is movable in particular transversely and preferably perpendicularly to the storage lines of the storage module.

Alternatively, it is conceivable that the removal device is formed as a pivotably operated belt that is pivotable between the storage lines of the storage module starting from the outfeed belt.

In particular, it is provided that a product separating device, preferably having at least one and in particular at least two vertical belts arranged in parallel, is associated with the first infeed belt, which device is configured in order to separate the products supplied via the first infeed belt, and/or a product separating device, preferably having at least one and in particular at least two vertical belts arranged in parallel, is associated with the second infeed belt, which device is configured in order to separate the products supplied via the second infeed belt.

According to the invention, it is provided that a bypass device is associated with the first infeed belt, said device having a shunt and a bypass line, wherein, via the shunt, products from the first infeed belt are dischargeable into the bypass line as needed; and/or a bypass device is associated with the second infeed belt, said device having a shunt and a bypass line, wherein, via the shunt, products from the first infeed belt are dischargeable into the bypass line as needed.

According to the invention, it is provided in particular that the apparatus comprises (only) a single outfeed belt and a single discharge system having a single removal device. Alternatively or additionally, it is provided that the first infeed belt and the at least one further, second infeed belt are each associated with different processing lines and are drivable or driven in a non-synchronized manner.

In particular, in the apparatus according to the invention, the first loading device and the second loading device are operated independently of one another.

According to a further aspect of the invention, upon reaching a defined fill level of one of the storage lines of the first group of storage lines of the storage module and/or upon sensing a package at the downstream end region of one of the storage lines of the first group of storage lines of the storage module, the first loading device is configured in order to preferably automatically load a next storage line or a further storage line of the first group of storage lines of the storage module.

Alternatively or in addition hereto, upon reaching a defined fill level of one of the storage lines of the second group of storage lines of the storage module and/or upon sensing a package at the downstream end region of one of the storage lines of the second group of storage lines of the storage module, the second loading device is configured to, preferably, automatically load a next storage line or a further storage line of the second group of storage lines of the storage module.

However, alternatively, it is of course also conceivable that the first loading device is also configured in order to load storage lines of the second group of storage lines and/or that the second loading device is configured in order to load storage lines of the first group of storage lines with packages, as needed.

In particular, it is provided according to the present invention that the storage lines of the first group of storage lines and the storage lines of the second group of storage lines are separately loadable with packages. For transporting the respective packages, a transport apparatus is preferably associated with each of the storage lines.

In this context, for example, it is conceivable that the transport apparatuses associated with the respective storage lines can in particular comprise at least one transport belt or at least one conveyor belt.

According to implementations of the apparatus according to the invention, it is provided that the discharge system is arranged at the downstream end region of the storage lines of the first and second group of storage lines. By contrast, the at least two input systems are respectively arranged at the upstream end region of the storage lines of the first and second group of storage lines, respectively.

The invention is not limited to embodiments in which the storage lines of the first group of storage lines and the storage lines of the second group of storage lines have the same receiving capacity and length. In particular, embodiments are also conceivable in which the storage lines of the first group of storage lines are different in length when compared to the storage lines of the second group of storage lines.

The underlying problem of the invention is further solved by a packaging system according to the parallel claim 15.

The packaging system comprises an apparatus of the aforementioned type according to the invention.

The packaging system further comprises a first packaging device arranged upstream of the first infeed belt when viewed in the transport direction of the first infeed belt and a second packaging device arranged upstream of the second infeed belt when viewed in the transport direction of the second infeed belt as well as optionally a third packaging device arranged downstream of the outfeed belt when viewed in the transport direction of the outfeed belt.

The first packaging device is configured in order to supply packages to the first infeed belt, wherein the first loading device is configured in order to supply the packages from the first infeed belt to a storage line of the first group of storage lines of the storage module.

The second packaging device is configured in order to supply packages to the second infeed belt, wherein the second loading device is configured in order to supply the packages from the second infeed belt to a storage line of the second group of storage lines of the storage module.

The discharge system is configured in order to remove the packages from the storage line of the first group of storage lines and the packages from the storage line of the second group of storage lines and supply them to the outfeed belt.

The outfeed belt is configured in order to supply the packages removed from the storage lines of the first group of storage lines and the second group of storage lines to the optionally provided third packaging device.

An exemplary embodiment of the invention is described in further detail below, with reference to the accompanying drawing.

### BRIEF DESCRIPTION OF THE DRAWINGS

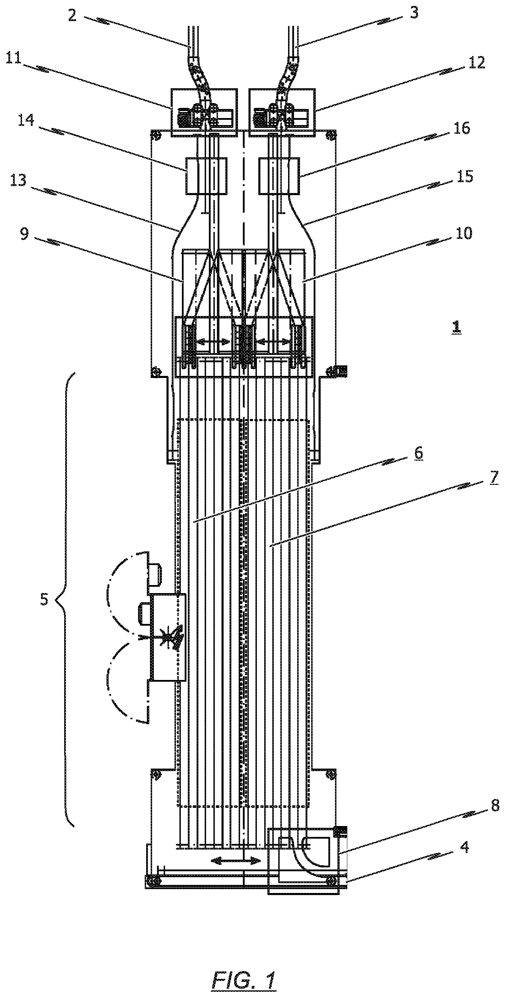

FIG. 1 shows a schematic top plan view of an exemplary embodiment of the apparatus according to the invention, which is configured as an intermediate storage system.

### DETAILED DESCRIPTION OF THE INVENTION

The exemplary embodiment of the device 1 according to the invention shown schematically in a top plan view in FIG. 1 is configured in particular as an intermediate storage system and specifically as a horizontal storage table.

The invention is based on the idea of filling the storage table 1 upon loading of two separate, non-synchronized lines (for example, during production with two individual filling machines) to two sections independently of one another, in that two linearly drivable product splitters actuate the individual storage lines or tracks of the storage table and fill in the respective sections.

These two sectors are then subsequently emptied with a single removal unit in the form of a satellite in order to further transport the individual products. In other words, the intermediate storage system, which is in particular configured as a horizontal storage table, performs an integrated line merging in addition to the intermediate storage of products.

The invention provides an additional deviation track (bypass for malfunctions) on which a pivot can occur by means of an upstream shunt in the event of a product divider malfunction in order to receive a certain number of successive products.

As can be seen in particular from the top plan view in FIG. 1, the intermediate storage system 1 according to the invention is characterized in that it only comprises a single outfeed belt 4 and a single discharge system having a single removal device 8. On the other hand, the first infeed belt 2 and the second infeed belt 3 are each associated with different processing lines, and they are drivable in a non-synchronized manner.

The first loading device 9 and the second loading device 10 are preferably operated independently of one another.

As shown in FIG. 1, the exemplary embodiment of the intermediate storage system 1 according to the invention comprises a first infeed belt 2 as well as a further, second infeed belt 3, wherein the two infeed belts 2, 3 are each drivable along an infeed direction. The intermediate storage system 1 further comprises a (single) outfeed belt 4, which is drivable along an outfeed direction. Between the two infeed belts 2, 3, and the outfeed belt 4, a storage module 5 is provided, which is formed from a plurality of (here, a total of 16) tracks arranged together, each of which are configured as storage lines 6, 7.

Further, a discharge system having a removal device 8 is provided, which is configured in order to remove products from one of the storage lines 6, 7 of the storage module 5 as needed and to supply these products to the outfeed belt 4.

In the embodiment shown schematically, the removal device 8 is configured as a linearly operated satellite, which is movable transversely and in particular perpendicularly to the individual storage lines 6, 7 of the storage module 5. Of course, other embodiments may also be considered, such as a pivotally operated belt.

The intermediate storage system 1 according to FIG. 1 further comprises a first loading device 9 associated with the first infeed belt 2 and configured in order to supply products supplied via the first infeed belt 2 to a first group of storage lines 6 of the storage module 5. In addition, a second loading device 10 associated with the at least one second infeed belt 3 is used, which is configured in order to supply products supplied via the second infeed belt 3 to a second group of storage lines 7.

In the embodiment of the intermediate storage system 1 according to the invention shown schematically in FIG. 1, the first storage line group consists of a total of 8 tracks, and the second storage line group also consists of 8 tracks.

In the exemplary embodiment, it is provided that the first and second loading device 9, 10 are each formed as a pivotally operated belt, which is pivotable between the storage lines of the respective storage line group, starting from the respective infeed belt.

Instead of a pivotally operated belt, however, a linearly operated satellite is also possible.

Between the loading device 9, 10 and the respective infeed belt 2, 3, a product separating device 11, 12 associated with the respective infeed belt is provided, which is configured in order to separate products supplied via the respective infeed belt 2, 3. The respective product separating devices 11, 12 each comprise two vertical belt belts arranged in parallel for this purpose.

Moreover, it is indicated in FIG. 1 that bypass devices is provided downstream of the product separating devices 11, 12 and upstream of the corresponding loading devices 9, 10. Each bypass device comprises a shunt 14, 16 and at least one bypass line 13, 15, wherein, via the shunt 14, 16, as needed, products from the corresponding infeed belt 2, 3 are dischargeable into the bypass line 13, 15.

### List of reference numerals

- 1: Apparatus for intermediate storage/Storage table
- 2: First infeed belt
- 3: Second infeed belt
- 4: Outfeed belt
- 5: Storage module
- 6: Storage lines of the first group of storage lines
- 7: Storage lines of the second group of storage lines
- 8: Removal device
- 9: First loading device
- 10: Second loading device
- 11: First product separating device
- 12: Second product separating device
- 13: First bypass line
- 14: Shunt
- 15: Second bypass line
- 16: Shunt

## Claims

1. An apparatus (1) for intermediate storage of products that are transportable by means of a conveying device, wherein the apparatus (1) comprises:
- a first infeed belt (2) and at least one further, second infeed belt (3), wherein the first and at least one second infeed belt (3) are each drivable along an infeed direction;
- an outfeed belt (4) that is drivable along an outfeed direction;
- a storage module (5) formed from a plurality of tracks, in particular arranged parallel to one another, each being configured as storage lines (6, 7);
- a discharge system having a removal device (8), which is configured in order to remove products from one of the storage lines (6, 7) as needed and to supply these products to the outfeed belt (4);
- a first loading device (9) associated with the first infeed belt (2) and configured in order to supply products supplied via the first infeed belt (2) to a first group of storage lines (6) of the storage module (5); and
- a second loading device (10) associated with the at least one second infeed belt (3) and configured in order to supply products supplied via the at least one second infeed belt (3) to a second group of storage lines (7) of the storage module (5),
**characterized**
**by** a bypass device that is associated with the first infeed belt (2), said device having a shunt (14) and a bypass line (13), wherein, via the shunt (14), products from the first infeed belt (2) are dischargeable into the bypass line (13) as needed; and/or
by a bypass device that is associated with the second infeed belt (3), said device having a shunt (16) and a bypass line (15), wherein, via the shunt (16), products from the first infeed belt (3) are dischargeable into the bypass line (15) as needed.

2. The apparatus (1) according to claim 1,
wherein the first group of storage lines (6) and the second group of storage lines (7) each comprise at least one storage line.

3. The apparatus (1) according to claim 1 or 2,
wherein the storage lines (6) belonging to the first group are different from the storage lines (7) belonging to the second group.

4. The apparatus (1) according to any one of claims 1 to 3,
wherein the first loading device (9) and/or the second loading device (10) is/are formed as an in particular linearly operated satellite, which is movable in particular transversely and preferably perpendicularly to the storage lines (6, 7) of the respective groups; or
wherein the first loading device (9) and/or the second loading device (10) is/are formed as a pivotally operated belt that is pivotable between the storage lines (6, 7) of the respective group starting from the respective infeed belt.

5. The apparatus (1) according to any one of claims 1 to 4,
wherein the removal device (8) is formed as an in particular linearly operated satellite, which is movable in particular transversely and preferably perpendicularly to the storage lines (6, 7) of the storage module (5); or
wherein the removal device (8) is formed as a pivotably operated belt that is pivotable between the storage lines (6, 7) of the storage module (5) starting from the outfeed belt (4).

6. The apparatus (1) according to any one of claims 1 to 5,
wherein a product separating device (11), preferably having at least one and in particular at least two vertical belts arranged in parallel, is associated with the first infeed belt (2), which device is configured in order to separate the products supplied via the first infeed belt (2); and/or
wherein a product separating device (12), preferably having at least one and in particular at least two vertical belts arranged in parallel, is associated with the second infeed belt (3), which device is configured in order to separate the products supplied via the second infeed belt (3).

7. The apparatus (1) according to any one of claims 1 to 6,
wherein the apparatus (1) comprises a single outfeed belt (4) and a single discharge system having a single removal device (8).

8. The apparatus (1) according to any one of claims 1 to 7,
wherein the first infeed belt (2) and the at least one further, second infeed belt (3) are each associated with different processing lines and are drivable or driven in a non-synchronized manner.

9. The apparatus (1) according to any one of claims 1 to 8,
wherein the first loading device (9) and the second loading device (10) are operated independently of one another.

10. The apparatus (1) according to any one of claims 1 to 9,
wherein, upon reaching a defined fill level of one of the storage lines (6) of the first group of storage lines of the storage module (5) and/or upon sensing a package at the downstream end region of one of the storage lines (6) of the first group of storage lines of the storage module (5), the first loading device (9) is configured in order to preferably automatically load a next storage line or a further storage line of the first group of storage lines (6) of the storage module (5); and/or
wherein, upon reaching a defined fill level of one of the storage lines (7) of the second group of storage lines of the storage module (5) and/or upon sensing a package at the downstream end region of one of the storage lines (7) of the second group of storage lines of the storage module (5), the second loading device (10) is configured in order to preferably automatically load a next storage line or a further storage line of the second group of storage lines (7) of the storage module (5).

11. The apparatus (1) according to any one of claims 1 to 10,
wherein the storage lines (6) of the first group of storage lines and the storage lines (7) of the second group of storage lines are separately capable of being loaded with packages, wherein, for transporting the respective packages, a respective transport apparatus is associated with each of the storage lines (6, 7).

12. The apparatus (1) according to claim 11,
wherein the respective transport apparatuses associated with the storage lines (6, 7) comprise transport belts or conveyor belts, in particular.

13. The apparatus (1) according to any one of claims 1 to 12,
wherein the discharge system is arranged at the downstream end region of the storage lines (6, 7) of the first and second group of storage lines, and wherein the at least two input systems are arranged at the upstream end region of the storage lines (6, 7) of the first and second group of storage lines, respectively.

14. The apparatus (1) according to any one of claims 1 to 13,
wherein the storage lines (6) of the first group of storage lines and the storage lines (7) of the second group of storage lines are configured to be different in length.

15. A packaging system having an apparatus (1) according to any one of claims 1 to 14 and having a first packaging device arranged upstream of the first infeed belt (2) when viewed in the transport direction of the first infeed belt (2) and having a second packaging device arranged upstream of the second infeed belt (3) when viewed in the transport direction of the second infeed belt (3) as well as optionally having a third packaging device arranged downstream of the outfeed belt (4) when viewed in the transport direction of the outfeed belt (4), wherein the first packaging device is configured in order to supply packages to the first infeed belt (2), wherein the first loading device (9) is configured in order to supply the packages from the first infeed belt (2) to a storage line of the first group of storage lines (6) of the storage module (5), wherein the second packaging device is configured in order to supply packages to the second infeed belt (3), wherein the second loading device (10) is configured in order to supply the packages from the second infeed belt (3) to a storage line of the second group of storage lines (7) of the storage module (5), wherein the discharge system is configured in order to remove the packages from the storage line of the first group of storage lines (6) and the packages from the storage line of the second group of storage lines (7) and supply them to the outfeed belt (4), wherein the outfeed belt (4) is configured in order to supply the packages removed from the storage lines (6, 7) of the first group of storage lines and the second group of storage lines to the optionally provided third packaging device.

## Patentansprüche

1. Vorrichtung (1) zum Zwischenlagern von Produkten, die mittels einer Fördereinrichtung transportierbar sind, wobei die Vorrichtung (1) Folgendes aufweist:
- ein erstes Zuführband (2) und mindestens ein weiteres, zweites Zuführband (3), wobei das erste und mindestens ein zweites Zuführband (3) jeweils entlang einer Zuführrichtung antreibbar sind;
- ein Abführband (4), das entlang einer Abführrichtung antreibbar ist;
- ein Speichermodul (5), das aus einer Mehrzahl von Spuren gebildet ist, die insbesondere parallel zueinander angeordnet sind, wobei diese jeweils als Speicherlinien (6, 7) ausgebildet sind;
- ein Entladesystem mit einer Entnahmeeinrichtung (8), die eingerichtet ist, bei Bedarf Produkte aus einer der Speicherlinien (6, 7) zu entnehmen und diese Produkte an das Abführband (4) zu liefern;
- eine erste Beladeeinrichtung (9), die dem ersten Zuführband (2) zugeordnet und eingerichtet ist, über das erste Zuführband (2) zugeführte Produkte einer ersten Gruppe von Speicherlinien (6) des Speichermoduls (5) bereitzustellen; und
- eine zweite Beladeeinrichtung (10), die dem mindestens einen zweiten Zuführband (3) zugeordnet ist und eingerichtet ist, über das mindestens eine zweite Zuführband (3) zugeführte Produkte einer zweiten Gruppe von Speicherlinien (7) des Speichermoduls (5) bereitzustellen,
**gekennzeichnet**
**durch** eine dem ersten Zuführband (2) zugeordnete Umgehungseinrichtung, wobei die Einrichtung eine Weiche (14) und eine Umgehungsleitung (13) aufweist, wobei über die Weiche (14) je nach Bedarf Produkte aus dem ersten Zuführband (2) in die Umgehungsleitung (13) abführbar sind; und/oder
**durch** eine dem zweiten Zuführband (3) zugeordnete Umgehungseinrichtung, wobei die Einrichtung eine Weiche (16) und eine Umgehungsleitung (15) aufweist, wobei über die Weiche (16) je nach Bedarf Produkte aus dem ersten Zuführband (3) in die Umgehungsleitung (15) abführbar sind.

2. Vorrichtung (1) nach Anspruch 1,
wobei die erste Gruppe von Speicherlinien (6) und die zweite Gruppe von Speicherlinien (7) jeweils mindestens eine Speicherlinie aufweisen.

3. Vorrichtung (1) nach Anspruch 1 oder 2,
wobei die Speicherlinien (6), die zu der ersten Gruppe gehören, sich von den Speicherlinien (7) unterscheiden, die zu der zweiten Gruppe gehören.

4. Vorrichtung (1) nach einem der Ansprüche 1 bis 3,
wobei die erste Beladeeinrichtung (9) und/oder die zweite Beladeeinrichtung (10) als insbesondere linear betriebener Satellit ausgebildet ist/sind, der insbesondere quer und vorzugsweise senkrecht zu den Speicherlinien (6, 7) der jeweiligen Gruppen bewegbar ist; oder
wobei die erste Beladeeinrichtung (9) und/oder die zweite Beladeeinrichtung (10) als ein schwenkbetätigtes Band ausgebildet ist/sind, das ausgehend von dem jeweiligen Zuführband zwischen den Speicherlinien (6, 7) der jeweiligen Gruppe schwenkbar ist.

5. Vorrichtung (1) nach einem der Ansprüche 1 bis 4,
wobei die Entnahmeeinrichtung (8) als insbesondere linear betriebener Satellit ausgebildet ist, der insbesondere quer und vorzugsweise senkrecht zu den Speicherlinien (6, 7) des Speichermoduls (5) bewegbar ist; oder
wobei die Entnahmeeinrichtung (8) als schwenkbar betriebenes Band ausgebildet ist, das ausgehend von dem Abführband (4) zwischen den Speicherlinien (6, 7) des Speichermoduls (5) schwenkbar ist.

6. Vorrichtung (1) nach einem der Ansprüche 1 bis 5,
wobei dem ersten Zuführband (2) eine Produkttrenneinrichtung (11), vorzugsweise mit mindestens einem und insbesondere mindestens zwei parallel angeordneten Vertikalbändern, zugeordnet ist, die zum Trennen der über das erste Zuführband (2) zugeführten Produkte eingerichtet ist; und/oder
wobei dem zweiten Zuführband (3) eine Produkttrenneinrichtung (12), vorzugsweise mit mindestens einem und insbesondere mindestens zwei parallel angeordneten Vertikalbändern, zugeordnet ist, die zum Trennen der über das zweite Zuführband (3) zugeführten Produkte eingerichtet ist.

7. Vorrichtung (1) nach einem der Ansprüche 1 bis 6,
wobei die Vorrichtung (1) ein einzelnes Abführband (4) und ein einzelnes Entladesystem mit einer einzelnen Entnahmeeinrichtung (8) aufweist.

8. Vorrichtung (1) nach einem der Ansprüche 1 bis 7,
wobei das erste Zuführband (2) und das mindestens eine weitere, zweite Zuführband (3) jeweils unterschiedlichen Verarbeitungslinien zugeordnet sind und nicht synchronisiert antreibbar oder angetrieben sind.

9. Vorrichtung (1) nach einem der Ansprüche 1 bis 8,
wobei die erste Beladeeinrichtung (9) und die zweite Beladeeinrichtung (10) unabhängig voneinander betrieben werden.

10. Vorrichtung (1) nach einem der Ansprüche 1 bis 9,
wobei bei Erreichen eines definierten Füllstands einer der Speicherlinien (6) der ersten Gruppe von Speicherlinien des Speichermoduls (5) und/oder bei Erfassen eines Pakets an dem stromabwärtigen Endbereich einer der Speicherlinien (6) der ersten Gruppe von Speicherlinien des Speichermoduls (5) die erste Beladeeinrichtung (9) eingerichtet ist, um vorzugsweise automatisch eine nächste Speicherlinie oder eine weitere Speicherlinie der ersten Gruppe von Speicherlinien (6) des Speichermoduls (5) zu laden; und/oder
wobei bei Erreichen eines definierten Füllstands einer der Speicherlinien (7) der zweiten Gruppe von Speicherlinien des Speichermoduls (5) und/oder bei Erfassen eines Pakets an dem stromabwärtigen Endbereich einer der Speicherlinien (7) der zweiten Gruppe von Speicherlinien des Speichermoduls (5) die zweite Beladeeinrichtung (10) eingerichtet ist, um vorzugsweise automatisch eine nächste Speicherlinie oder eine weitere Speicherlinie der zweiten Gruppe von Speicherlinien (7) des Speichermoduls (5) zu laden.

11. Vorrichtung (1) nach einem der Ansprüche 1 bis 10,
wobei die Speicherlinien (6) der ersten Gruppe von Speicherlinien und die Speicherlinien (7) der zweiten Gruppe von Speicherlinien getrennt mit Paketen beladen werden können, wobei zum Transportieren der jeweiligen Pakete jeder der Speicherlinien (6, 7) eine jeweilige Transportvorrichtung zugeordnet ist.

12. Vorrichtung (1) nach Anspruch 11,
wobei die jeweiligen, den Speicherlinien (6, 7) zugeordneten Transportvorrichtungen insbesondere Transportbänder oder Förderbänder aufweisen.

13. Vorrichtung (1) nach einem der Ansprüche 1 bis 12,
wobei das Entladesystem an dem stromabwärtigen Endbereich der Speicherlinien (6, 7) der ersten und zweiten Gruppe von Speicherlinien angeordnet ist, und wobei die mindestens zwei Eingabesysteme jeweils an dem stromaufwärtigen Endbereich der Speicherlinien (6, 7) der ersten und zweiten Gruppe von Speicherlinien angeordnet sind.

14. Vorrichtung (1) nach einem der Ansprüche 1 bis 13,
wobei die Speicherlinien (6) der ersten Gruppe von Speicherlinien und die Speicherlinien (7) der zweiten Gruppe von Speicherlinien so eingerichtet sind, dass sie unterschiedlich lang sind.

15. Verpackungssystem, aufweisend eine Vorrichtung (1) nach einem der Ansprüche 1 bis 14 und aufweisend eine erste Verpackungseinrichtung, die in Transportrichtung des ersten Zuführbandes (2) gesehen stromaufwärts des ersten Zuführbandes (2) angeordnet ist, und aufweisend eine zweite Verpackungseinrichtung, die in Transportrichtung des zweiten Zuführbandes (3) gesehen stromaufwärts des zweiten Zuführbandes (3) angeordnet ist, sowie optional aufweisend eine dritte Verpackungseinrichtung, die in Transportrichtung des Abführbandes (4) gesehen stromabwärts des Abführbandes (4) angeordnet ist, wobei die erste Verpackungseinrichtung eingerichtet ist, um Pakete dem ersten Zuführband (2) zuzuführen, wobei die erste Beladeeinrichtung (9) konfiguriert ist, um die Pakete von dem ersten Zuführband (2) einer Speicherlinie der ersten Gruppe von Speicherlinien (6) des Speichermoduls (5) zuzuführen, wobei die zweite Verpackungseinrichtung eingerichtet ist, um Pakete dem zweiten Zuführband (3) zuzuführen, wobei die zweite Beladeeinrichtung (10) eingerichtet ist, um die Pakete von dem zweiten Zuführband (3) einer Speicherlinie der zweiten Gruppe von Speicherlinien (7) des Speichermoduls (5) zuzuführen, wobei das Entladesystem eingerichtet ist, um die Pakete aus der Speicherlinie der ersten Gruppe von Speicherlinien (6) und die Pakete aus der Speicherlinie der zweiten Gruppe von Speicherlinien (7) zu entnehmen und dem Abführband (4) zuzuführen, wobei das Abführband (4) eingerichtet ist, um die aus den Speicherlinien (6, 7) der ersten Gruppe von Speicherlinien und der zweiten Gruppe von Speicherlinien entnommenen Pakete der optional vorgesehenen dritten Verpackungseinrichtung zuzuführen.

## Revendications

1. Appareil (1) pour le stockage intermédiaire de produits qui sont transportables au moyen d'un dispositif de convoyage, dans lequel l'appareil (1) comprend :
- une première courroie d'entrée (2) et au moins une deuxième courroie d'entrée supplémentaire (3), dans lequel la première et au moins une deuxième courroie d'entrée (3) sont chacune entraînables le long d'une direction d'entrée ;
- une courroie de sortie (4) qui entraînable le long d'une direction de sortie ;
- un module de stockage (5) formé d'une pluralité de pistes, en particulier agencées les unes parallèles aux autres, chacune étant configurée comme des lignes de stockage (6, 7) ;
- un système de décharge ayant un dispositif d'enlèvement (8), qui est configuré pour retirer des produits d'une des lignes de stockage (6, 7) selon les besoins et pour alimenter ces produits vers la courroie de sortie (4) ;
- un premier dispositif de chargement (9) associé à la première courroie d'entrée (2) et configuré pour alimenter des produits alimentés via la première courroie d'entrée (2) vers un premier groupe de lignes de stockage (6) du module de stockage (5) ; et
- un deuxième dispositif de chargement (10) associé à au moins une deuxième courroie d'entrée (3) et configuré pour fournir des produits alimentés via l'au moins une deuxième courroie d'entrée (3) vers un deuxième groupe de lignes de stockage (7) du module de stockage (5),
**caractérisé**
**par** un dispositif de contournement qui est associé à la première courroie d'entrée (2), ledit dispositif ayant une dérivation (14) et une ligne de contournement (13), dans lequel, via la dérivation (14), les produits provenant de la première courroie d'entrée (2) peuvent être déchargés dans la ligne de contournement (13) selon les besoins ; et/ou
par un dispositif de contournement qui est associé à la deuxième courroie d'entrée (3), ledit dispositif ayant une dérivation (16) et une ligne de contournement (15), dans lequel, via la dérivation (16), les produits provenant de la première courroie d'entrée (3) peuvent être déchargés dans la ligne de contournement (15) selon les besoins.

2. Appareil (1) selon la revendication 1,
dans lequel le premier groupe de lignes de stockage (6) et le deuxième groupe de lignes de stockage (7) comprennent chacun au moins une ligne de stockage.

3. Appareil (1) selon la revendication 1 ou 2,
dans lequel les lignes de stockage (6) appartenant au premier groupe sont différentes des lignes de stockage (7) appartenant au deuxième groupe.

4. Appareil (1) selon l'une quelconque des revendications 1 à 3,
dans lequel le premier dispositif de chargement (9) et/ou le deuxième dispositif de chargement (10) est/sont formé(s) en tant que satellite en particulier à fonctionnement linéaire, qui est mobile en particulier transversalement et de préférence perpendiculairement aux lignes de stockage (6, 7) des groupes respectifs ; ou
dans lequel le premier dispositif de chargement (9) et/ou le deuxième dispositif de chargement (10) est/sont formé(s) comme une courroie mise en fonctionnement de manière pivotante qui peut pivoter entre les lignes de stockage (6, 7) du groupe respectif en démarrant à partir de la courroie d'entrée respective.

5. Appareil (1) selon l'une quelconque des revendications 1 à 4,
dans lequel le dispositif de retrait (8) est formé en tant que satellite en particulier à fonctionnement linéaire, qui est mobile en particulier transversalement et de préférence perpendiculairement aux lignes de stockage (6, 7) du module de stockage (5) ; ou
dans lequel le dispositif de retrait (8) est formé comme une courroie actionnée de manière pivotante qui peut pivoter entre les lignes de stockage (6, 7) du module de stockage (5) en démarrant à partir de la courroie de sortie (4).

6. Appareil (1) selon l'une quelconque des revendications 1 à 5,
dans lequel un dispositif de séparation de produits (11), ayant de préférence au moins une et en particulier au moins deux courroies verticales agencées en parallèle, est associé à la première courroie d'entrée (2), lequel dispositif est configuré pour séparer les produits alimentés via la première courroie d'entrée (2) ; et/ou
dans lequel un dispositif de séparation de produits (12), ayant de préférence au moins une et en particulier au moins deux courroies verticales agencées en parallèle, est associé à la deuxième courroie d'entrée (3), lequel dispositif est configuré pour séparer les produits alimentés via la deuxième courroie d'entrée (3).

7. Appareil (1) selon l'une quelconque des revendications 1 à 6, dans lequel l'appareil (1) comprend une unique courroie de sortie (4) et un unique système de décharge ayant un unique dispositif de retrait (8).

8. Appareil (1) selon l'une quelconque des revendications 1 à 7, dans lequel la première courroie d'entrée (2) et l'au moins une deuxième courroie d'entrée supplémentaire (3) sont chacune associées à des lignes de traitement différentes et sont entraînables ou entraînées d'une manière non synchronisée.

9. Appareil (1) selon l'une quelconque des revendications 1 à 8, dans lequel le premier dispositif de chargement (9) et le deuxième dispositif de chargement (10) sont mis en fonctionnement indépendamment l'un de l'autre.

10. Appareil (1) selon l'une quelconque des revendications 1 à 9, dans lequel, lors de l'atteinte d'un niveau de remplissage défini de l'une des lignes de stockage (6) du premier groupe de lignes de stockage du module de stockage (5) et/ou lors de la détection d'un emballage au niveau de la région d'extrémité aval de l'une des lignes de stockage (6) du premier groupe de lignes de stockage du module de stockage (5), le premier dispositif de chargement (9) est configuré afin de charger de préférence automatiquement une ligne de stockage suivante ou une ligne de stockage supplémentaire du premier groupe de lignes de stockage (6) du module de stockage (5) ; et/ou dans lequel, lors de l'atteinte d'un niveau de remplissage défini de l'une des lignes de stockage (7) du deuxième groupe de lignes de stockage du module de stockage (5) et/ou lors de la détection d'un emballage au niveau de la région d'extrémité aval de l'une des lignes de stockage (7) du deuxième groupe de lignes de stockage du module de stockage (5), le deuxième dispositif de chargement (10) est configuré afin de charger de préférence automatiquement une ligne de stockage suivante ou une ligne de stockage supplémentaire du deuxième groupe de lignes de stockage (7) du module de stockage (5).

11. Appareil (1) selon l'une quelconque des revendications 1 à 10,
dans lequel les lignes de stockage (6) du premier groupe de lignes de stockage et les lignes de stockage (7) du deuxième groupe de lignes de stockage peuvent être chargées séparément avec des emballages, dans lequel, pour transporter les emballages respectifs, un appareil de transport respectif est associé à chacune des lignes de stockage (6, 7).

12. Appareil (1) selon la revendication 11,
dans lequel les appareils de transport respectifs associés aux lignes de stockage (6, 7) comprennent des courroies de transport ou des courroies de convoyeur respectives, en particulier.

13. Appareil (1) selon l'une quelconque des revendications 1 à 12,
dans lequel le système de décharge est agencé au niveau de la région d'extrémité aval des lignes de stockage (6, 7) du premier et du deuxième groupe de lignes de stockage, et dans lequel les au moins deux systèmes d'admission sont agencés au niveau de la région d'extrémité amont des lignes de stockage (6, 7) du premier et du deuxième groupe de lignes de stockage, respectivement.

14. Appareil (1) selon l'une quelconque des revendications 1 à 13,
dans lequel les lignes de stockage (6) du premier groupe de lignes de stockage et les lignes de stockage (7) du deuxième groupe de lignes de stockage sont configurées pour avoir des longueurs différentes.

15. Système d'emballage ayant un appareil (1) selon l'une quelconque des revendications 1 à 14 et ayant un premier dispositif d'emballage agencé en amont de la première courroie d'entrée (2), vue dans la direction de transport de la première courroie d'entrée (2), et ayant un deuxième dispositif d'emballage agencé en amont de la deuxième courroie d'entrée (3), vue dans la direction de transport de la deuxième courroie d'entrée (3), ainsi que facultativement, un troisième dispositif d'emballage agencé en aval de la courroie de sortie (4), vue dans la direction de transport de la courroie de sortie (4), dans lequel le premier dispositif d'emballage est configuré afin d'alimenter la première courroie d'entrée (2) en emballages, dans lequel le premier dispositif de chargement (9) est configuré afin d'alimenter une ligne de stockage du premier groupe de lignes de stockage (6) du module de stockage (5) avec les emballages provenant de la première courroie d'entrée (2), dans lequel le deuxième dispositif d'emballage est configuré afin d'alimenter la deuxième courroie d'entrée (3) en emballages, dans lequel le deuxième dispositif de chargement (10) est configuré afin d'alimenter une ligne de stockage du deuxième groupe de lignes de stockage (7) du module de stockage (5) avec les emballages provenant de la deuxième courroie d'entrée (3), dans lequel le système de décharge est configuré afin de retirer les emballages de la ligne de stockage du premier groupe de lignes de stockage (6) et les emballages de la ligne de stockage du deuxième groupe de lignes de stockage (7) et de les alimenter vers la courroie de sortie (4), dans lequel la courroie de sortie (4) est configurée afin d'alimenter le troisième dispositif d'emballage facultativement prévu avec les emballages retirés des lignes de stockage (6, 7) du premier groupe de lignes de stockage et du deuxième groupe de lignes de stockage.
